# EUROPEAN PATENT APPLICATION

(11) **EP 1 839 991 A1**
(43) Date of publication of application: **03.10.2007**
(21) Application number: 07012901.0
(22) Date of filing: 05.04.2002
(51) Int. Cl.: B61L 27/00, B61L 23/34, G01S 5/00

(54) **A device to prevent collision between the trains and the like transportation system**

(62) Divisional of application: 02735962.9
(71) Applicant: M/s. Konkan Railway Corporation Limited, Navi Mumbai 400 614 MAH (IN)
(72) Inventor: Rajaram, Bojji, Maharashtra (IN)
(74) Representative: Macpherson, Craig Stuart

(57) **Abstract**

An anti-collision device for trains and like transportation system comprising of a microprocessor based command and control unit (CCU), a Global positioning system (GPS) with satellite signal receiver antenna, a crew interface of desired capacity/range with directional antenna, an I/O sub-system, a braking signal unit linked with braking mechanism for locomotive speed control, a message display unit having audio and/or visual display means and a power supply system, preferably consisting of a battery and power converter, all units and systems functionally interconnected.

## Description

### FIELD OF THE INVENTION

This invention relates to an Anti-collision device (ACD) for trains and the like transportation system. More particularly this invention relates to an ACD, mainly working on microprocessor based system with radio-trans receiver, working in a pre-determined range of say 2 Hm and having own power supply system, which when mounted on locomotive, brake van, level crossing gates, railway station or any other station automatically generates signals for converting and adopting into various safety measures such as activating, braking system of a running train to retard its speed to a safe limit or completely halting the train within a safe distance, all sorts of train collisions are prevented by activating hooters at level crossing gates road users are warned and safe guarded, by activating audio / visual signals, crew member or gate man at level crossing gates are alerted to take preventive measures by recording and correcting information's regarding location, speed etc. of approaching trains.

### BACKGROUND ART:

The collision of trains causes damage to property and life and these accidents occurring due to the collision of trains causes mental trauma to the people. The various kinds of train accidents are head-on collision, side collision, rear end collision of the train and the train colliding with some other vehicles such as bus, car etc. at the level crossing.

Generally, the head-on collision of the trains used to take place due to human error. The collision of the train with other vehicles at manned and unmanned level crossing (LC) gates, occurred due to the mistake of road user or railway staff. Such incidents due to human error were generally not preventable with the available technology. This kind of mishap i.e. collision of trains which occur due to system failure or human failure can be prevented by using the current available technology, i.e. Anti-Collision Device, which works automatically within a desired pre-determined range of distance.

### OBJECT OF THE INVENTION

The main object of this invention is to prevent accidents i.e. Collision of trains by using the Anti-Collision Device. The Anti-Collision Device when mounted on a locomotive and guard van of a train, prevents collision at speed higher than 15kmph with another running train fitted with similar ACD's, in block sections and running lines at stations, totally independent of signaling and interlocking systems currently prevailing, as well as collisions with road vehicles at level crossing gates, thus providing a silent safety shield by networking with other ACD's fitted at stations and level crossing gates.

Another object of this invention is to provide an anti collision device for trains which works automatically, having its own power source and actively operates within a desired predetermined range of distance, so that trains move at such a safe speed that without colliding they move together at such a speed that in case, the inter-se distance tends to reduce speed is automatically controlled.

Another object of this invention is to provide an Anti-Collision Device which acts as alertness check device for the running staff and also serves as a warning device for the driver to look for the first stop signal as the train approaches station.

Further object of this invention is to provide an Anti-Collision Device which prevents head-on collision of the trains by stopping the train automatically by using remote control without the involvement of the train crew and the Anti-Collision Device also acts as a warning device for the commuters against the approaching train at level crossings.

Another object of this invention is to provide an anti collision device for trains which works automatically, having its own power source and actively operates within a desired predetermined range of distance, so that trains move at such a safe speed that without colliding they move together at such a speed that in case, the inter-se distance tends to reduce speed is automatically controlled.

While exiting station area where the train had arrived earlier, the deviation count at the time of exit is used to determine whether the train is dispatched on expected correct or not.

The number of deviation count from the line the train entered the station, indicates the number of line from the entry line, on to which the train has entered.

In any given yard it is possible to uniquely work out the deviation count required from a given starting line to reach a specified line, and the station ACD carries this knowledge, which it shares with the loco ACD.

This is explained further as detailed:

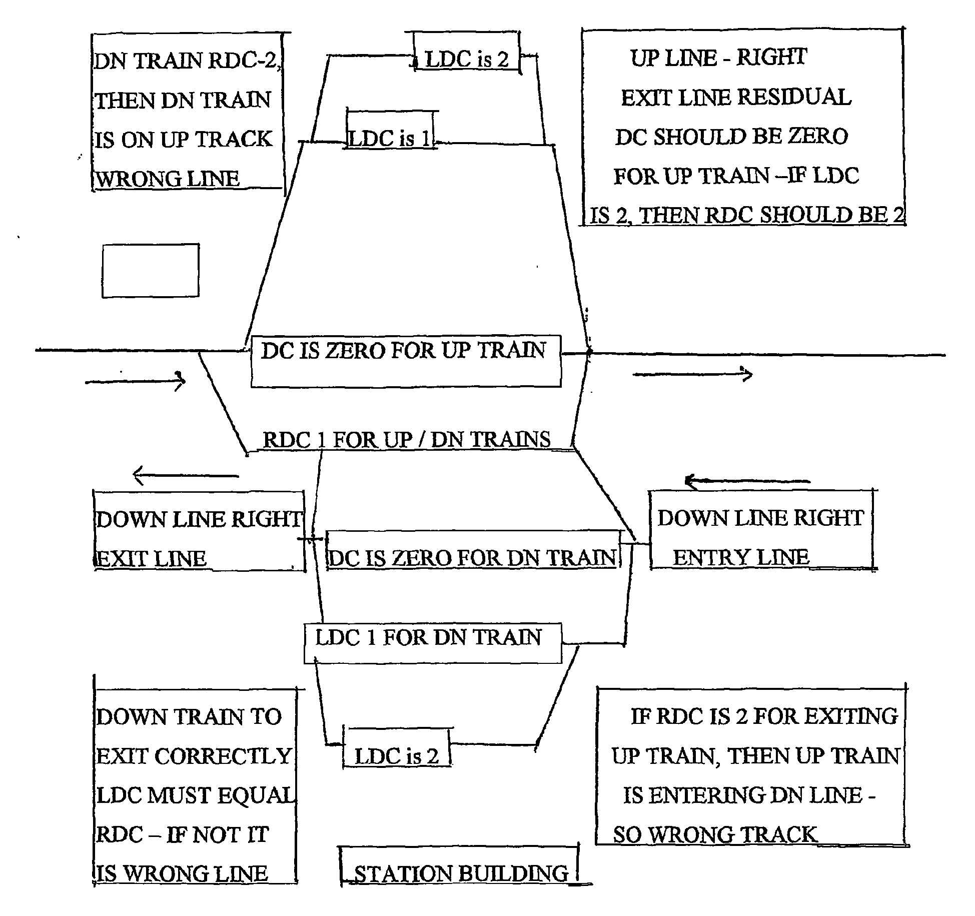

### EXAMPLE 1

Where DC means Deviation count as defined, LDC means Left Deviation Count, (Left or Right is with reference to direction of movement as one enters station area station area), RDC is Right Deviation Count.

If the block section type is same on either side of station that is either single line or double line the number of LDC as the train enters a station area must be same a the number of RDC while exiting, for the train to go on right track.

But if a double line block section is on one side and single line section on the other side, then a residual count of either right or left will be predefined for the station yard-to know that exit line is right for the train leaving the station area. The following figure illustrates.

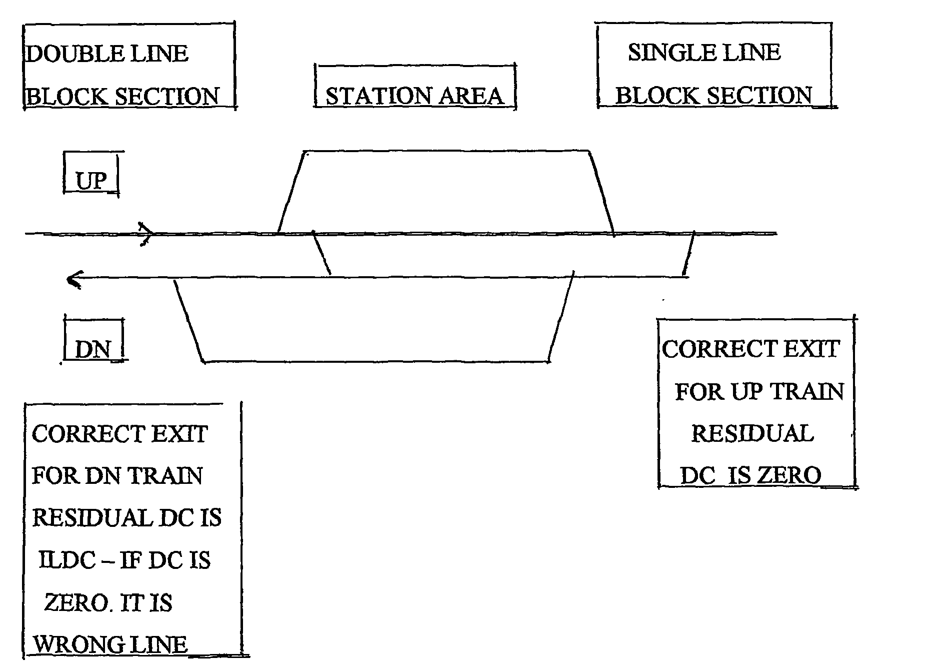

### EXAMPLE 2

With reference to direction of movement, left or right deviation counts, progressively indicates the line number from the entry line to left or right-where the ACD has reached.

For example, for an upcoming train entering, if ACD executes one left deviation only, then it has rolled on to a line adjacent and on left to the Up main line.

Suppose the train has to exit now this line on the right Up line, it must execute one right deviation - if it executes more than that, then obviously the train has entered NOT-the correct Up exit line-but wrong one.

### SUMMARY OF THE INVENTION

The present invention relates to an Anti-Collision Device (ACD) for the trains and the like transportation system, which prevents collision between the trains and between the train and other vehicles. Accordingly this invention provides an anti collision device for trains and the like transportation system comprising of a microprocessor based command and control unit, a global positioning system with satellite signal receiver antenna, a crew interface of desired capacity / range with directional antenna an I/O. sub system, a breaking signal unit linked with breaking mechanism for locomotive speed control, a message display unit having audio and / or visual display means and a power supply system, preferably consisting of a battery and power converter, all units and system functionally interconnected.

This Ani-Collision Device when mounted on locomotives, brake vans, level crossing gates, railway stations or any other station will automatically generate signals for converting and adopting various safety measures such as activating and reduces the speed of the train and brings the train to a complete halt within a safe distance by preventing the collision between two trains and collision between the train and other vehicles at level crossings.

### DETAILED DESCRIPTION OF THE INVENTION

The inventions will now be described with reference to accompanying drawings wherein:
Fig 1. Shows in block schematic diagram. The anti-collision device for trains and the like transportation system according to an embodiment of this invention.

Referring to fig.1 the anti-collision device, according to this invention, mainly comprises a command and control unit (CCU) (1) consisting of microprocessor base module for processing the data and generating commands from the ACD, a Global Positioning System (GPS).

GPS system picks up, signals through satellites and submits the same to CCU for deciphering to extract the parameters related to the movement of locomotive, like latitude, longitude, speed, date and time etc. The antenna (3) of the GPS receiver is fitted on the rooftop of the locomotive.

A crew interface and data entry key pad (4) which helps the driver to feed the data at the beginning of the train journey like train number, direction of travel (whether Up or Dn) and running on RIGHT or WRONG track (which may be changed at any station, if the situation so arise). A Radio Trans Receiver (5) of desired capacity / range which transmits the information and commands being generated being sent by the similar ACDs, when the same is within the radio-range (about 1.5 to 2 kms or even more). The directional antenna for the Radio trans receiver is fitted outside the locomotive Cab. An I/O sub-system (6), which gives signals to breaking signal unit (7), to actuate the breaking mechanism (not shown) for locomotive speed control and a message display signal unit (8) having Audio and / or visual display means. A Battery (9) with power converter (10) for power supply system of the ACD.

### The Braking mechanism for Speed Control of the Locomotive

As a result of the processing of information received from other ACDs, the command and Control Unit takes a decision for applying either the normal brake or the emergency on the locomotive, as the case may be. The Electro-pneumatic braking is then applied through suitable solenoid interface for this purpose in the cab of locomotive.

The ACDs on the locomotives as well as those provided at unmanned as well as manned non-interlocked Level Crossing Gates exchange their identification details with relevant data enroute through digitally encoded data packets when they come within the radio-range of each other. Based on the analysis of the data or at LC Gate or in Guard's Van will then initiate necessary action.

### Functional Requirement Specifications:

The functional requirement specifications are described individually for each type of
ACD viz,
Loco ACD
Station ACD
Guard ACD
Level Crossing ACD

### Loco ACD:

Should detect and identify all ACDs within 3 km range whether it is a loco or station or guard or level crossing ACD and clearly and uniquely identify multiple number of the same type.

### From each type of ACD the data packet received should be analysed to determine:

If the other ACD is of loco:
The ACD's detect if the relative distance between them is reducing and also detect if moving on the same track, if so, initiate action to warn the drivers through audio-visual indications and initiate appropriate braking action automatically to avoid collision, when relative distance is reducing, ACD also detects the unusual stopping of the other ACD when it is not a station area, but on a right track line, and checks for normalcy signal from that ACD-if not present, should slow down the train while giving audio-visual indications, to 25 kmph, or less as prescribed detect any SOS signal if transmitted by any ACD within 3 to 4 km and should immediately apply appropriate braking, while warning the driver in station area should if the other ACD is fouling tracks.

If the other ACD is station ACD, should
Get knowledge of station main line occupation
Gets information of first stop signal locations of current and station ahead, to alert loco driver through audio-visual warnings demanding acknowledgement, while approaching the same Detects any SOS and acts to stop Get information for type of block section ahead Get information about current and station ahead running line identification in terms of deviation count numbers Detect if any train's rear end is fouling from the station ACD
Give information about defective gate ACD in block section in rear.

If the other ACD is level crossing ACD-manned with gates, should
Detect if gate is open and reduce speed to 25 kmph
Detect SOS and stop train
Detect if gate ACD is defective
Automatically initiate whistling by the loco while approaching the gate

If the other ACD is level crossing unmanned, should
Automatically whistle while approaching the gate
Detect possible obstruction of track and slow train to 25 kmph
Detect if gate ACD is defective
If the other ACD is guard ACD, should:
Identify own train guard ACD
Detect if continuing with the train maintaining integrity-
If parting is detected, driver should be warned
Detect in station area whether guard ACD cleared the cross over in rear as well as fouling mark
Detect if guard ACD is defective
Detect SOS from guard ACD and stops train

On it's own, should
Detect in station area on which line it is standing
While departing determine whether in fact moving on right or wrong line, whatever be the written declaration of station staff
Detect, if the ACD mounted loco, in station area, is fouling any tracks
Detect alertness of running staff on the loco in normal run in block section and as it approaches the first stop signal-absence of alertness should slow down of train
Conduct self-check and advise if not working as per specifications
Should detect if running staff on loco are under duress

### Station ACD:

Within 3 km range should be able to identify the type of ACD i.e., loco, guard and uniquely identify each one of them when more than one is present
Should detect the ACD and the line it is occupying
Should advise the deviation count from the line of entry from block section vs., the line number in the station
Should have the deviation count for correct exit line from the station from any despatch line
Should advise deviation count information as above for station ahead
Should advise the location of first stop signals for current and next station ahead
Advise the types of two block sections ahead
Advise the locations of ACD fitted level crossing gates in the two block sections ahead
Should detect loco/guard ACD fouling any line in the yard
Should start siren or hooter if a guard ACD is detected to be rolling back into station
Should detect if any facing point on the main line is set to loop
Should conduct self-check and advise if not working to specifications

### Guard ACD:

Should uniquely identify the ACD in a range of 3km or twice the emergency braking distance required.
Should derive own identity from loco ACD of nominated train-from declared train number
Monitor for alertness of guard
Should detect if train parting has taken place
Should generate SOS signal if parting takes place
Should allow manual generation of SOS
Should have long stand alone power supply system for over 12 hour working
Be portable and of brief case size to be fixed with anti theft frame on brake van or SLR

### Level crossing gate ACD:

Should identify the approaching train ACD and warn road users with audio-visual signals
Should detect gate open condition, if it is provided with gates, and warn the approaching train Should do self-check and report if defective to passing loco ACD
Should detect if road is possibly blocked and advise the approaching loco ACD.

The ACD is capable of functioning with or without inputs from GPS when inputs are provided from standard digital tacho-meter normally available in locomotives coupled with angular measurements of the bogie relative to the longitudinal axis of the loco body.

The above inputs make it possible for the ACDs to replace the inputs that it is getting from the GPS and act in the same manner as described above.
The working of the ACD according to this invention with its Various Scenarios in Action is as under:
How ACD is activate:
Loco ACDs:
   If two ACDS within 3 km range find themselves approaching each other, they check if they are on same line, and if so, initiate action to apply brakes on both the locomotives.
   If two ACDs within 3 km range or as prescribed range depending upon the braking distances, find themselves approaching each other, but on different lines and at normal speed, then they just pass each other safely. But if one of them had slowed down and driver fails to press the normalcy button, to indicate he has stopped but nothing serious for the adjacent line, then the ACD moving at normal speed will continue on it's course.

Else, that is driver has a problem or he is not yet sure, so he does not press the normalcy button, speed of approaching train is brought down to 25 or 15 kmph as prescribed, to enable driver to quickly stop if he detects any obstruction to him.
If any of these two ACDs initiated an SOS signal, because derailment has detected and adjacent track needs protection, bake application starts automatically and train is brought to halt-avoiding collision.

Types of collisions and description as how ACDs act to prevent the same occurring at dangerous speeds:
1. Head-on collisions: Head on collisions should not normally occur if all present systems of signalling and other prescribed rules are observed by staff rigorously. But when rules are not observed or flouted like drivers passing signals at danger or station masters carelessly giving memos comprising facts-thus involving occurrence of more than two or three persons failing-collisions do take place. ACD can take care at this stage independent of staff actions. Each type of head on collision is described and how the ACD protects the same:
1.2 In single line block section:
In present system:
   The block section in advance is already occupied by a running train, but paper line clear, by-passing the block instruments provided is issued by station master allowing another train to enter the same block section, or a driver mistakes some signals and passes signal at danger and enters the block section-or the station is non-interlocked and station-master commits a mistake, which means more than two or three errors would have taken place, in such cases-the trains may have head on collision, if the trains are approaching each other.
   When ACDs are fitted:
      Since ACDs are working independent of actions of station master as well as interlocking or signals at stations, they are not influenced by these mistakes or failures.
      When two Loco ACDs detect each other within 3 km range, since it is a case of reducing the relative distance between them, and both are on same line, braking will start and trains brought to stop short of each other.

1.3 Double-line sections:
Present system:
   Generally when for some operational reasons, if a train is diverted from it's normal correct track, it has to negotiate a cross-over to change the line. In such cases paper line authorities are served on the driver-to proceed on to the "wrong" line. In case station master commits a mistake, which may happen if the station also is working on temporary non-interlocked basis, and declares to driver that he is going on the correct and "right" line only without being diverted, perhaps even believes so, forgetting to set the cross over correctly, then the train can proceed on the "wrong" line and may collide with another train coming in the opposite direction following correct procedures.

When ACDs are provided:
Since Loco ACD is constructed in such a way that, it can detect the deviation count, based on information from the station ACD, automatically finds out that the train has been diverted on to a wrong line, and will not allow another Loco ACD on the same line to collide with, by braking both the trains once they detect each other within 3 km.

1.4 Station area-single line sections on either side:
Present system:
   A train received on the main line is stopping for signals to proceed further, say. As per rules another train is permitted to approach the station from opposite side.
   Signals not given pending setting of route, say. The approaching train must stop at signal as per rules. But driver commits a mistake and passes the signal at danger and head on collision takes place.
   When ACDs are fitted:
      The Loco ACD of train received in the station and standing on the main line, by virtue of its construction identifies that deviation count is zero and hence, the line identification is transmitted to other loco ACD.
      The train approaching the station area from block section knows from the station
      ACD that facing points are not set or not set to loop. If not set to loop, the Loco
      ACD of approaching train will apply brakes to stop the train detecting another Loco
      ACD on the same line. If station ACD conveys that facing point is set to loop, then, even though the approaching train detects a Loco ACD standing on the main line, will only reduce speed to 15 kmph to enter loop. At this stage, driver will have enough time to stop. If he further discovers that the loop also is occupied by another train.
      Since Loco ACD is so constructed to know that within 3 km range if two of them are approaching each other on the same line, brakes automatically apply, and hence no collision takes place

2.0 Rear-end collisions:
Presently:
A train is received and is waiting for further line clear, say on main line. Meantime
Another train approaches that station from the block section in rear. Station master is Correct in not taking off signal for the approaching station as he may need time to set route etc. and expects rightly the train to stop at signal. Driver commits a mistake and passes the signal at danger and rams into the standing train.
When fitted with ACDs:
Loco ACD of approaching train while demanding for alertness of driver as the train approaches the station area to observe the first stop signal, takes action to slow down train to 15 kmph if driver is not vigilant. In case driver also declares that he is vigilant and still tends to commit a mistake of not observing signal, the ACDs will further act; because the station ACD advises the approaching Loco that, say, facing points are not set to loop, then brakes apply automatically once the other Loco ACD in station area is detected on the same line as the approaching train. In addition the Guard ACD also will act to stop the approaching train. Hence collision will be prevented.

The working of the ACD according to this invention with its Various Scenarios in Action is as under:

| | | | |
|---|---|---|---|
| No | Scenario | Situation | Action by 'ACD' |
| 1. | 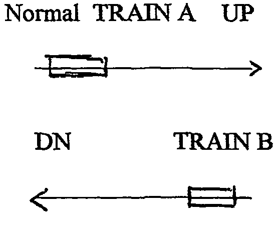 | Up Train on Up Track. Down Train and Down Track - Both Trains Moving. | No Action |
| 2. | 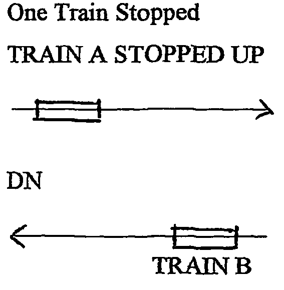 | Tain 'A' stopped in mid-section out of way and Train 'B' is Moving | ACD of Train 'B' will automatically initiate AV Indication and braking to reduce the train speed to 25 Kmph. |
| 3. | 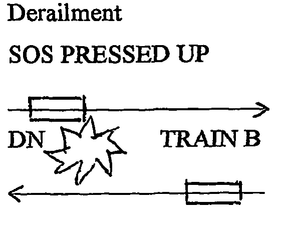 | Train 'A' has derailed resulting in adjacent track may or may not getting blocked. Driver 'A' presses 'SOS" button on ACD. | 'SOS of Train 'A' when detected by ACD of Train 'B' will automatically initiate AV Indication and braking action to STOP the train. Side collision Averted. |
| 4. | Temporary Single | Line Working | |
| | 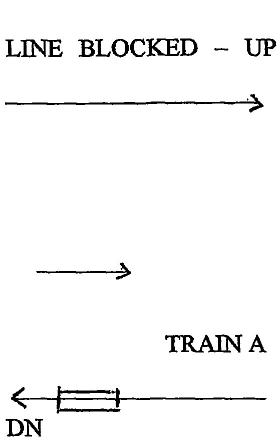 | a. Up line is blocked. Hence Up Train 'A' is sent on WRONG Track. | The ACD of Up Train 'A' will automatically restrict its speed to 25 kmph throughout the journey provided the data is updated in its ACD at the station from where such diversion from the RIGHT track to the WRONG track is permitted. |
| | 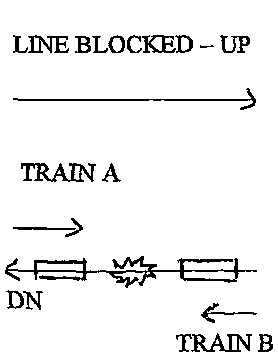 | b. Now Down Train 'B' is also approaching from the Opposite direction on the RIGHT Track. | ACDs of both the trains sense the DANGER and initiate automatic AV indication & braking to bring their respective trains to STOP-Applicable also to Single Line Sections - Head-on Colliosion Averted. |
| 5. | Rear-end collision at stations | A train is received on a loop line, the points are not reversed, the following train from block sections ignores red signal and approaches at full speed to collide with the standing train. | The approaching trains ACD knowns whether the train is being received on main line or not, and if the point setting is such that deviation from main line is indicated, speed of trains is automatically controlled to 15 kmph and as it enters station, can detect by its unique construction to detect on to which line it is likely to be taken and also can known from station ACD if the line is occupied, apply emergency brakes and stop the train from colliding. |
| 6. | 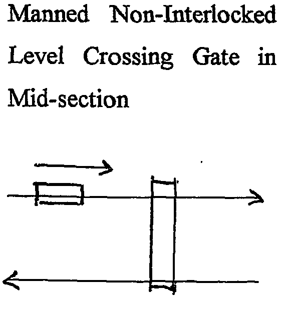 | a. Gate Closed | ACD of LC Gate sounds 'Hooter' when the Train is approaching. The same will STOP moment the train passes the gate or gateman acknowledges the AV Indication. |
| | 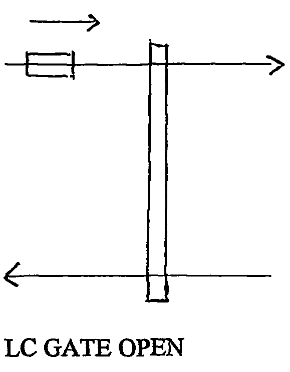 | b. Gate Open/Under Operation | ACD et LC sound the 'Hooter' & send automaticatlly the status of LC Gate position to the ACD of the approaching trains, who in turn will automatically initiate AV Indication & braking to reduce the train speed to 25 kmph. |
| | 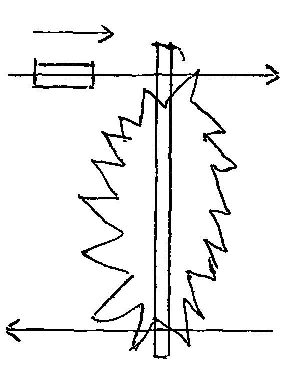 | c. Gate damaged (closed or open) & Gateman presses the 'SOS' button. | 'SOS' generated by ACD of LC Gate when detected by ACDs of approaching Trains will automatically initiate the AV Indication & braking action to STOP the train. Collision with the Road Vehicle infringing the track portion averted. |
| 7. | Unmanned Level Crossing Gate | | |
| | 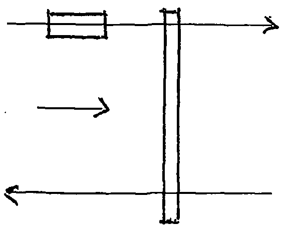 | When the train is approaching the LC Gate and its ACD is within the radio-range of the ACD at the LC Gate. | ACD of LC Gate will automatically start 'Hooter' to warn the road users of the approaching train. The hooter will stop also automatically, after the passage of train (substitute for Train Actuated Warning Device TAWD). |
| 8. | Driver Alert | | |
| | 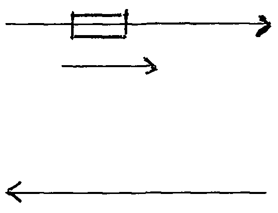 | Driver to press "Driver Alert Button" as and when the AV Indication appears, at and interval of every 15 minutes. | ACD will automatically apply the brakes to stop the train in case Driver fails to acknowledge the AV Indication within one minutes of its appearance. |

9. Demarcation of Station Section from Adjacent Block Section-
Station ACD will demarcate the station section between two consecutive block sections. Station ACD will continuously communicate the location details (latitude and longitude) of its first stop signal (home or outer, as the case may be, provided at either ends), to loco ACDs of all the approaching trains. Based on the information received, the "loco ACD" will then light up "Station Approaching" lamp indication and give audio indication also to alert the driver. If the driver fails to acknowledge the same within 30 seconds, the normal application of brakes will be initiated by the "Loco ACD" to bring to A STOP, irrespective of the fact that the aspect of the FIRST stop signal is in 'ON' or 'OFF' position.
10. Locos Within Station Section-
Once the loco ACDs find themselves within the station section (based on the information received from the station ACD), and their speeds are also 15 Kmph or less, they will switch over to "Receive only" mode, automatically. However, in case of emergencies, such ACDs will still be in a position to send "SOS" signals to other ACDs who are within their radio range.
11. Locos (including Shunting Locos) Moving At Speeds More Than 15 Kmph In Station Section Or Moving Out Of The Station Section-
The loco ACD of the train will permit resumption of transmission of its own information for the benefit of other ACDs in the vicinity when its speed in the station yard goes above 15 Kmph or the loco comes out of the station section (as demarcated by station ACD).
12. Despatching Trains on "Wrong" Line From The Station Section-
After ensuring that the FIRST train on the WRONG line has already been sent with speed restriction of 25 Kmph, the station ACD will permit loco ACDs of subsequent trains on WRONG lines at normal speeds, by conveying such information to loco ACD, automatically, through radio communication. In such cases, driver will also have a facility to view such updated information on screen of loco ACD, before initiating appropriate necessary action.
13. Additional Safety Features For Non Inter-Locked Working At Stations-
Station ACD will take following extra precautions, in case Non Interlocked working has been introduced at such stations and the Station ACD has been advised of the same by Station master on duty.
Station ACD will restrict the speed of ALL the approaching trains to 15 Kmph by communicating the Non Interlocked working to their respective loco ACDs" in advance.
As a precaution the Station ACD will automatically force the change over of track nomination on Loco ACDs of ALL the approaching trains to WRONG line. Due to this the default setting for loco ACDs of all the trains departing from such non interlocked station will be "WRONG" line, unless changed otherwise by Station Master on duty to "RIGHT" line through his / her Station ACD. This will reduce the probability of head-on collision even if any one of such trains really escape on wrong line in the block section, due to human error, either by design or by chance.
14. Handling the Failure of Station ACD-
Failure of Station ACD due to any reason will result in lifting of the "MASK" of station section, which otherwise separates the jurisdiction of adjacent block sections.
As a result of such failure, even in case of station section, the logic meant for block section will apply. Since transceiver of ACDs of trains moving at speeds of 15 KMPH or less will be in 'receive only' mode, the other trains can pass through that station at their NORMAL speeds. The real Safety in station yard will be ensured through, Signalling System and the Interlocking provided through it. In addition, pressing of "SOS" through ACD by any one of the trains in station yard will compel the ACDs of all the other trains to bring their respective trains to stop.

When coupled with inputs of GPS as well as inputs coming from the tacho-meter and the angular measurement of the bogies, the availability and reliability of the device increases many-fold, with the result one can introduce a moving-block system on any working railway, dispensing with currently available signalling and track circuiting system.

The ACD works in all kinds of signalling territory whether they are automatic block system or block section working on tokens which are the oldest systems currently surviving - that means any category of signalling from the oldest category to the most sophistocated category, the ACDs function independently and ensure that no collision takes place at a speed higher than 15 kmph so long as both the moving objects are fitted with the ACDs.

The above description and illustration are given just to understand the invention rather than to limit its scope. The ACD referred herein for trains can also be similarly adopted and used for any other transportation system.

## Claims

1. An anti-collision device for trains and the like transportation system comprising of a microprocessor based command and control unit (CCU), a Global positioning system (GPS) with satellite signal receiver antenna, a crew interface of desired capacity / range with directional antenna, an I/O sub system, a braking signal unit linked with braking mechanism for locomotive speed control, a message display unit having audio and / or visual display means and a power supply system, preferably consisting of a battery and power converter, all units and systems functionally interconnected as shown in fig.1.

2. An anti-collision device for trains and the like transportation system, substantially as herein described and illustrated in the figures of the accompanying drawings.
